# EUROPÄISCHE PATENTANMELDUNG

(11) **EP 0 613 281 A1**
(43) Veröffentlichungstag der Anmeldung: **31.08.1994**
(21) Anmeldenummer: 94101662.8
(22) Anmeldetag: 03.02.1994
(51) Int. Cl.: H04M 3/42, H04M 1/00

(54) **Fernmeldenebenstellenanlage**

(30) Priorität: 26.02.1993 DE 9302865 U
(71) Anmelder: SIEMENS AKTIENGESELLSCHAFT, D-80333 München (DE)
(72) Erfinder: Debacker, Andre, B-9880 Aalter (BE)

(57) **Zusammenfassung**

Eine Fernmeldenebenstellenanlage ist mit einem Zeiterfassungsmodul versehen, das im Zuge eines über ein Fernmeldenetz gerichteten Verbindungsaufbaus zu einem externen Teilnehmer die beim externen Teilnehmer aktuelle Tageszeit erfaßt und an einer Anzeigeeinrichtung auf dem Nebenstellenendgerät des betreffenden internen Teilnehmers zur Anzeige bringt.

## Beschreibung

Die Neuerung betrifft eine Fernmeldenebenstellenanlage zur Verbindung von Nebenstellenendgeräten untereinander und von Nebenstellenendgeräten mit Fernmeldenetzen insbesondere öffentlichen Netzen, mit einem Zeitgebermodul zur Bildung einer jeweils aktuellen lokalen Tageszeitinformation, die an Anzeigeeinrichtungen der Nebenstellenendgeräte visualisierbar ist.

Es sind bereits Fernmeldenebenstellenanlagen mit einer lokalen Uhr bekannt. Die von dieser Uhr gebildeten Tageszeitinformation wird digitalen Nebenstellenendgeräten zugeführt und auf deren optischen Anzeigeeinrichtungen dargestellt. Bei dem aus den Produktschriften der Firma Siemens "System Hicom 200", Ordering Number A 19100-K 3161-G 538 und "Hicom 600 System", Ordering Number A 19100-K 3161-G 430-01 bekannten Fernmeldenebenstellenanlagen ist vorgesehen, bei komfortablen Nebenstellenendgeräten die aktuelle Uhrzeit und das aktuelle Datum anzuzeigen. Die Anzeige kann entweder durch Drücken einer Bedientaste aktiviert werden oder ständig aktiviert sein.

Ausgehend von einer Fernmeldenebenstellenanlage mit den Merkmalen des Oberbegriffs nach Schutzanspruch 1 ist die vorliegende Neuerung gekennzeichnet durch ein sich jeweils im Zuge eines über ein Fernmeldenetz gerichteten Verbindungsaufbaus zwischen einem Nebenstellenendgerät eines internen Teilnehmers und einem Endgerät eines externen Teilnehmers aktivierendes Zeiterfassungsmodul zur Ermittlung der beim externen Teilnehmer jeweils aktuellen Tageszeit, die als externe Tageszeitinformation alternativ oder zusätzlich zu der lokalen Tageszeitinformation an der Anzeigeeinrichtung des Nebenstellenendgerätes des internen Teilnehmers visualisierbar ist.

Als wesentlicher Vorteil dieser Neuerung ist anzusehen, daß im Falle voneinander abweichender Ortszeiten bei den Verbindungspartnern dem internen Teilnehmer sofort ein entsprechender Hinweis durch Anzeige einer externen Zeitinformation gegeben wird. Hilfsmittel, z. B. Weltzeituhren, zur Bestimmung der Ortszeit beim Verbindungspartner werden mit der vorliegenden Neuerung überflüssig.

Ein weiterer wesentlicher Vorteil besteht darin, daß ein zeitlich ungünstig veranlaßter Verbindungsaufbau frühzeitig erkannt wird, sodaß eine unbeabsichtigte Belästigung des externen Verbindungspartners, z. B. während der Nachtruhe, vermieden werden kann.

Vorteilhafte Weiterbildungen der Neuerung sind in den Unteransprüchen angegeben.

Mit Hilfe eines Wahlinformationsbewertungsmoduls kann unmittelbar nach Eingabe eines ersten, für eine Zeitzonenzuordnung relevanten Teils der Wahlinformation eine Berechnung der akuellen Ortszeit beim externen Verbindungspartner erfolgen, unabhängig davon, ob beim gewünschten Verbindungspartner im weiteren ein Belegt- oder Freizustand erkannt wird oder ob die Verbindung überhaupt zustande kommt.

Die Erstellung der externen Tageszeitinformation benötigt einen relativ geringen Aufwand, wenn in einer Zeitzonentabelle den zeitzonenrelevanten Teilen einer Wahlinformation zugehörige Zeitdifferenzwerte gespeichert sind. Die Zeitdifferenzwerte stellen dabei die positive oder negative Stundendifferenz dar, um die die bei einem externen Verbindungspartner gültige Ortszeit gegenüber der beim internen Teilnehemer gültigen Ortszeit versetzt ist. - Anspruch 2 und 3.

Mit Hilfe eines Zeitinformationsempfängermoduls, das von einer Zielvermittlungsanlage übertragene Zeitinformationen auswertet, lassen sich Berechnungsfehler, die insbesondere bei einer Umstellung von Sommer- auf Winterzeit auftreten können, vermeiden. Außerdem können die empfangenen Zeitinformationen dazu benützt werden, um gespeicherte Zeitdifferenzwerte zu aktualisieren.

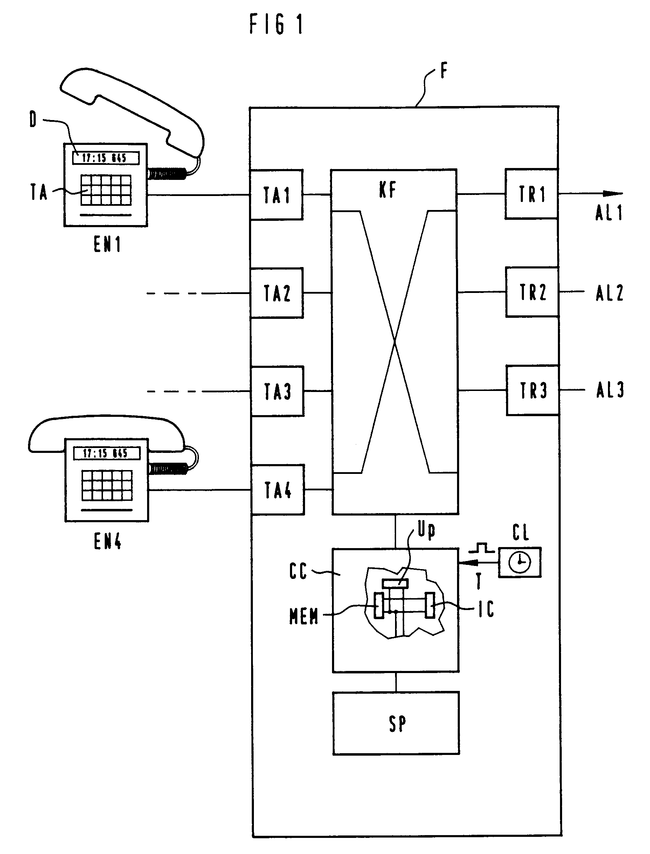

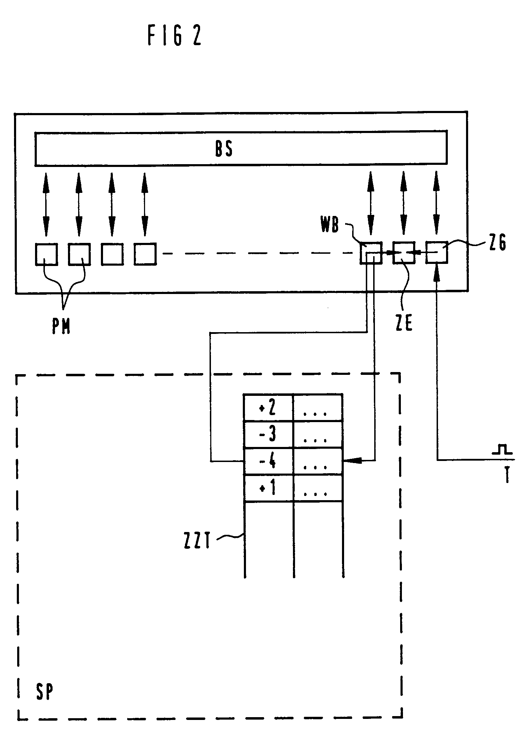

Nachfolgend wird im Rahmen einer in der Figur 1 dargestellten Fernmeldenebenstellenanlage ein Ausführungsbeispiel der Neuerung näher erläutert, wobei Figur 2 zur Veranschaulichung programmtechnisch realisierter Module dient.

Die in Figur 1 in Form eines Blockschaltbildes dargestellte Nebenstellenanlage F weist im wesentlichen eine zentrale Steuerung CC, ein Koppelfeld KF und einen Speicher SP auf. Interne Endgeräte EN1..EN4 sind über Teilnehmeranschlußschaltungen TA1..TA4 mit dem Koppelfeld verbunden. Die internen Endgeräte EN1..EN4 weisen eine Anzeigeeinrichtung in Form eines 'Display' D zur Anzeige von Informationen, insbesondere von Zeitinformationen und einen Tastenblock TA zur Eingabe einer Wahlinformation auf.

Mit dem Koppelfeld KF sind Amtssatze TR1..TR3 verbunden, die der Herstellung von gehendem und/oder kommendem Amtsverkehr über die zugehörigen Amtsleitungen AL1..AL3 dienen. Unter Amtsleitungen werden die Anschlußleitungen an das öffentliche Fernmeldenetz verstanden.

Der mit der zentralen Steuerung CC verbundene Speicher SP enthält unter anderem Konfigurationsdaten und Teilnehmerdaten, die den konkreten Ausbau der Nebenstellenanlage definieren bzw. benutzerbezogene Systemdaten darstellen.

Die zentrale Steuerung CC besteht im wesentlichen aus einem Prozessorsystem mit einem Mikroprozessor UP, einem Arbeitsspeicher MEM und einem Anreizempfangerbaustein IC.

Eine Zeitgebereinrichtung CL, die mit einer elektronischen Uhr vergleichbar ist, übermittelt in periodischer Abfolge Echtzeitinformationen in Form von Impulsen T an den Anreizempfangerbaustein IC in der zentralen Steuerung CC.

Bei der zentralen Steuerung CC handelt es sich um eine speicherprogrammierte Steuerung, d. h. daß alle Steuer- und Überwachungsfunktionen der Fernmeldenebenstellenanlage durch eine Abarbeitung von aufgaben- und funktionsindividuell strukturierten Programmodulen erfolgt.

In Figur 2 ist in einer abstrahierten Blockdarstellung eine zugehörige programmtechnische Struktur veranschaulicht, die aus einem Betriebssystem BS und einer Vielzahl von funktionsbezogenen Programmodulen PM besteht, bei deren Ausführung durch den Mikroprozessor UP eine jeweilige Funktion ausgeführt wird.

Auch die für die vorliegende Neuerung und ihrer Ausführungsformen relevanten Module sind als Programmodule realisiert. Ein Wahlinformationsbewertungsmodul WB ist dazu vorgesehen, um zu einer an einem Endgerät EN1..EN4 eingegebenen Wahlinformation, mit der eine Amtsleitung AL..AL3 belegt wird, ggf. einen Zeitdifferenzwert zu ermittelt. Dies geschieht mit Hilfe einer im Speicher SP gespeicherten Zeitzonentabelle ZZT, in der den Ziffernfolgen der internationalen Nummer nach CCIT E163 - 164 zugeordnet, jeweils ein Zeitdifferenzwert hinterlegt ist. Dieser Zeitdifferenzwert gibt an, wieviel Stunden vor- oder zurückgerechnet zwischen der vorliegenden Ortszeit und der beim gerufenen Verbindungspartner geltenden Tageszeit liegen.

Von einem Zeitgebermodul ZG, das von der Zeitgebereinrichtung CL in periodischen Abständen Echtzeitinformationen T zur Fortschaltung der Tageszeitinformation erhalt, wird die aktuelle lokale Tageszeitinformation in regelmäßigen Abständen an die Endgeräte EN1..EN4 übermittelt, um auf deren 'Displays' D dargestellt zu werden.

Diese lokale Tageszeitinformation wird vom Zeitgebermodul außerdem einem Zeiterfassungsmodul ZE übermittelt, dem zudem vom Wahlinformationsbewertungsmodul WB im Falle einer belegten Amtsleitung AL1..AL3 ein Zeitdifferenzwert zugeleitet wird. Das Zeiterfassungsmodul ZE ermittelt aus diesen beiden Informationen, nämlich der aktuellen Tageszeitinformation und dem Zeitdifferenzwert eine externe Tageszeitinformation und überträgt diese an dasjenige Endgerät EN1..EN4, an dem die betreffende Wahlinformation eingegeben wurde. An dem 'Display' D dieses Endgerätes EN1 erscheint dann die externe Tageszeitinformation alternativ oder zusätzlich zur lokalen Tageszeitinformation.

Anstelle oder in Ergänzung zu den erwähnten Programmodulen kann ein Zeitinformationsempfängermodul (nicht dargestellt) vorgesehen sein, das im Zuge des Verbindungsaufbaus von einem Endgerät EN1..EN4 über eine der Amtsleitungen AL1..AL3 zu einer Zielvermittlungseinrichtung (nicht dargestellt) eine von der Zielvermittlungseinrichtung übermittelte Zeitinformation, die der externen Tageszeitinformation entspricht, empfängt. Die übermittelte Zeitinformation kann auch dazu verwendet werden, um in der Zeitzonentabelle die Zeitdifferenzwerte zu aktualisieren.

## Patentansprüche

1. Fernmeldenebenstellenanlage zur Verbindung von Nebenstellenendgeräten (EN1...EN4) untereinander und von Nebenstellenendgeräten mit Fernmeldenetzen insbesondere öffentlichen Netzen, mit einem Zeitgebermodul (ZG) zur Bildung einer jeweils aktuellen lokalen Tageszeitinformation, die an Anzeigeeinrichtungen (D) der Nebenstellenendgeräte visualisierbar ist,
**gekennzeichnet durch** ein sich jeweils im Zuge eines über ein Fernmeldenetz gerichteten Verbindungsaufbaus zwischen einem Nebenstellenendgerät (EN1...EN4) eines internen Teilnehmers und einem Endgerät eines externen Teilnehmers aktivierendes Zeiterfassungsmodul (ZE) zur Ermittlung der beim externen Teilnehmer jeweils aktuellen Tageszeit, die als externe Tageszeitinformation alternativ oder zusätzlich zu der lokalen Tageszeitinformation an der Anzeigeeinrichtung (D) des Nebenstellenendgerätes (EN1) des internen Teilnehmers visualisierbar ist.

2. Fernmeldenebenstellenanlage nach Anspruch 1,
**gekennzeichnet durch** ein Wahlinformationsbewertungsmodul (WB) zur Ermittlung eines Zeitdifferenzwertes in Abhängigkeit einer an einem Nebenstellenendgerät (EN1...EN4) eingegebenen Wahlinformation, wobei der Zeitdifferenzwert zusammen mit der aktuellen lokalen Tageszeitinformation jeweils als Eingabeinformationen für das Zeiterfassungsmodul (ZE) dienen.

3. Fernmeldenebenstellenanlage nach Anspruch 2,
**dadurch gekennzeichnet**, daß das Wahlinformationsbewertungsmodul (WB) eine Zeitzonentabelle (ZZT) aufweist, in der zu Wahlinformationen zugeordnete Zeitdifferenzwerte gespeichert sind.

4. Fernmeldenebenstellenanlage nach Anspruch 1,
**gekennzeichnet durch** ein Zeitinformationsempfängermodul zum Empfang einer von einer im Zuge des Verbindungsaufbaus beteiligten Zielvermittlungsanlage übertragenen Zeitinformation, die die aktuelle Tageszeit bei einem jeweiligen externen Teilnehmer repräsentiert.
